(19) Europäisches Patentamt European Patent Office Office européen des brevets

(11) **EP 4 524 054 A1**

(12) **EUROPEAN PATENT APPLICATION**
published in accordance with Art. 153(4) EPC

(43) Date of publication:
**19.03.2025  Bulletin 2025/12**

(21) Application number: **23803251.0**

(22) Date of filing: **23.03.2023**

(51) International Patent Classification (IPC):
**B65D 81/26** (2006.01)          **B65D 33/01** (2006.01)

(52) Cooperative Patent Classification (CPC):
**B65D 33/01; B65D 81/26**

(86) International application number:
**PCT/JP2023/011524**

(87) International publication number:
**WO 2023/218768 (16.11.2023 Gazette 2023/46)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **11.05.2022  JP 2022077883**
**28.07.2022  JP 2022120811**

(71) Applicant: **W & CO.**
**Tokyo 150-0011 (JP)**

(72) Inventor: **WATANABE, Toru**
**Tokyo 150-0011 (JP)**

(74) Representative: **Von Rohr Patentanwälte**
**Partnerschaft mbB**
**Rüttenscheider Straße 62**
**45130 Essen (DE)**

(54) **COFFEE-PRESERVING BAG BODY AND METHOD FOR MANUFACTURING SAME**

(57)     Provided are a coffee-preserving bag body capable of, in addition to discharging carbon dioxide and suppressing intrusion of oxygen, having sufficient strength, and preventing inflow of outside air due to a rapid volume change, and others.

According to the present invention, there is provided a coffee-preserving bag body 10 for preserving 60 g to 2000 g of coffee, wherein the coffee-preserving bag body 10 comprises a band-shaped joining region 16 in which two ends 12a of a film are mutually overlapped and joined together, wherein the band-shaped joining region is internally provided with: a gas chamber 26 which is a space shaped as approximately rectangular waves, the gas chamber 26 being formed by leaving the film unjoined to extend along the joined ends of the film, and sealed at both ends thereof; an inner gas flow passage 28 communicating between the gas chamber and an internal space of the bag body; and an outer gas flow passage 30 communicating between the gas chamber and an external space of the bag body, such that they form a ventilation channel 24, wherein the gas chamber comprises: an approximately linear-shaped transverse part 36 extending in a direction along which the approximately rectangular waves extend approximately parallel to the joined ends of the film; a longwise part 38 extending in a direction connecting the internal space and the external space, at an angle of 40 degrees to 120 degrees with respect to the transverse part; and a bent part 40 which is a joining part between the transverse part and the heightwise part.

FIG.1

**Description**

TECHNICAL FIELD

The present invention relates to a coffee-preserving bag body and a manufacturing method therefor, and more specifically to a coffee-preserving bag body capable of discharging carbon dioxide generated inside the bag body to the outside of the bag body, and preserving coffee in the bag body in a stable quality over a long period of time, while preventing the degradation of the coffee, and a manufacturing method for the bag body.

BACKGROUND ART

A preserving bag body for storing coffee (beans, or powder) requires a capability to prevent intrusion of oxygen from the outside, because the quality of coffee is degraded due to contact with oxygen during preservation.

On the other hand, since carbon dioxide generated by coffee during preservation causes the bag body to expand, and can cause the bag body to rupture in some situations, such carbon dioxide generated inside the bag body by coffee during preservation needs to be discharged to the outside of the bag body. Particularly in coffee, since it is often preserved over a longer period of time, as compared to fruits and vegetables, or fresh flowers, a high oxygen intrusion prevention function and a high carbon dioxide discharge function are required.

In order to satisfy such a need, a technique of attaching a check valve to a bag for preserving coffee is also implemented. However, a check valve is costly, and the bag body with a check valve attached thereto involves a problem that a manufacturing process becomes complicated.

As a configuration for improving this shortcoming, there has been proposed a bag body having a long ventilation passage connecting the inside and outside of the bag body (Patent Documents 1 and 2). Using this configuration, it is possible to preserve coffee while suppressing the degradation of the coffee due to intrusion of oxygen, without causing the bag body to expand.

PRIOR ART DOCUMENTS

[Patent Document]

Patent Document 1: JP 7004359 B1
Patent Document 2: JP 2021-075303A

SUMMARY OF INVENTION

[Technical Problem]

However, if an external force acts on the bag body due to an accident such as dropping of the bag body onto a floor during preservation, the bag body can be broken.

Further, when an external force acts on the bag body and the volume of the bag body is rapidly changed even if the bag body is not broken, outside air containing oxygen intrudes into the bag body along with the volume change, which can make it impossible to sufficiently suppress the degradation of coffee inside the bag body.

The configurations of Patent Documents 1 and 2 are very effective in terms of satisfying both the discharge of carbon dioxide and the prevention of oxygen inflow, but are not exactly sufficient in terms of the strength of the bag body, and prevention of the inflow of outside air due to a rapid volume change.

Therefore, it has been desired to provide a technique capable of, in addition to discharging carbon dioxide and suppressing intrusion of oxygen, having sufficient strength, and preventing inflow of outside air due to a rapid volume change.

The present invention is intended to provide a coffee-preserving bag body capable of, in addition to discharging carbon dioxide and suppressing intrusion of oxygen, having sufficient strength, and preventing inflow of outside air due to a rapid volume change.

Further, the present invention is intended to provide a manufacturing method for such a coffee-preservation bag body, and a coffee preservation method using the coffee-preserving bag body.

[Solution to Technical Problem]

According to a first preferred aspect of the present invention, there is provided a coffee-preserving bag body for preserving 60 g to 2000 g of coffee, the bag body being formed by a barrier film, wherein the bag body has a longitudinal length of 10 cm to 60 cm, and a lateral length of 6 cm to 40 cm, and comprises a band-shaped joining region in which two ends of the film are mutually overlapped and joined together, wherein the band-shaped joining region is internally provided with: a gas chamber which is a space shaped as approximately rectangular waves, the gas chamber being formed by leaving the film unjoined to extend along the joined ends of the film, and sealed at both ends thereof; an inner gas flow passage communicating between the gas chamber and an internal space of the bag body; and an outer gas flow passage communicating between the gas chamber and an external space of the bag body, whereby a ventilation channel communicating between an inside and an outside of the bag body is composed of the inner gas flow passage, a subsection of the gas chamber communicating with the inner gas flow passage, and the outer gas flow passage being adjacent to the inner gas flow passage and communicating with the subsection of the gas chamber, wherein the gas chamber comprises: an approximately linear-shaped transverse part extending in a direction along which the approximately rectangular waves extend approximately parallel to the joined ends of the film; a heightwise part extending in a direction connecting the internal space and the external space of the bag body, at an angle of 40 degrees to 120 degrees with respect to the transverse part; and a bent part which is a joining part between the transverse part and the heightwise part.

According to a second preferred aspect of the present invention, there is provided a coffee-preserving bag body for preserving 60 g to 2000 g of coffee, the bag body being formed by a barrier film, wherein the bag body has a longitudinal length of 10 cm to 60 cm, and a lateral length of 6 cm to 40 cm, and comprises a band-shaped joining region in which two ends of the film are mutually overlapped and joined together, wherein the band-shaped joining region is internally provided with: a gas chamber which is a space shaped as approximately rectangular waves, the gas chamber being formed by leaving the film unjoined to extend along the joined ends of the film, and sealed at both ends thereof; an inner gas flow passage communicating between the gas chamber and an internal space of the bag body; and an outer gas flow passage communicating between the gas chamber and an external space of the bag body, whereby a ventilation channel communicating between an inside and an outside of the bag body is composed of the inner gas flow passage, a subsection of the gas chamber communicating with the inner gas flow passage, and the outer gas flow passage being adjacent to the inner gas flow passage and communicating with the subsection of the gas chamber, wherein the gas chamber comprises: an approximately linear-shaped transverse part extending in a direction along which the approximately rectangular waves extend approximately parallel to the joined ends of the film; a heightwise part extending in a direction connecting the internal space and the external space of the bag body, at a given angle with respect to the transverse part; and a bent part which is a joining part between the transverse part and the heightwise part, wherein when an angle formed by the transverse part and the heightwise part of the gas chamber at one end of the transverse part is denoted by $\alpha$, and an angle formed by the transverse part and the heightwise part of the gas chamber at the other end of the transverse part is denoted by $\beta$, ($\alpha + \beta$) is 150 degrees to 240 degrees.

In a preferred embodiment of the present invention, the ventilation channel is provided in a number of one to twelve.

In a preferred embodiment of the present invention, the gas chamber has a length of 200 mm to 2400 mm.

In a preferred embodiment of the present invention, the ventilation channel has a widest portion and a narrowest portion, wherein a ratio of a width of the widest portion to a width of the narrowest portion is 1.2 to 3.

In a preferred embodiment of the present invention, the bent part is formed in a number of 15 to 90 per said ventilation channel.

In a preferred embodiment of the present invention, each of the inner gas flow passage and the outer gas flow passage has a width of 0.5 mm to 3 mm.

In a preferred embodiment of the present invention, a ratio of a width of the gas chamber to a width of the outer gas flow passage is 0.4 to less than 1.0.

In a preferred embodiment of the present invention, the gas chamber is arranged such that the heightwise part extends to cross an imaginary straight line Lc extending along a widthwise center of the band-shaped joining region, wherein when a length of a given portion of the imaginary straight line extending to pass through the heightwise part of the gas chamber is denoted by At, and a total length of joined portions of the film on the given portion of the imaginary straight line having the length At is denoted by Ad, (Ad/At) is 0.10 to 0.75.

In a preferred embodiment of the present invention, a total area of the gas chamber in plan view is 75 mm$^2$ to 2000 mm$^2$,

In a preferred embodiment of the present invention, the band-shaped joining region is an ultrasonically joined portion.

According to a third preferred aspect of the present invention, there is provided a coffee-preserving bag body manufacturing method characterized by comprising manufacturing the coffee-preserving bag body as mentioned above, using an ultrasonic joining machine which comprises a disk-shaped anvil having, on an outer peripheral surface thereof, a concavity-convexity pattern corresponding to the band-shaped joining region, and a disk-shaped horn having a flat and smooth circumferential surface.

According to a fourth preferred aspect of the present invention, there is provided a coffee preservation method, wherein 60 g to 2000 g of coffee is filled into and preserved in the coffee-preserving bag body as claimed in claim 1 or 2.

According to a fifth preferred aspect of the present invention, there is provided a coffee-preserving bag body for preserving 60 g to 1200 g of coffee, the bag body being formed by a barrier film, wherein the bag body has a longitudinal length of 10 cm to 60 cm, and a lateral length of 10 cm to 40 cm, and comprises a band-shaped joining region in which two ends of the film are mutually overlapped and joined together,

wherein the band-shaped joining region is internally provided with: a gas chamber which is a space shaped as approximately rectangular waves, the gas chamber being formed by leaving the film unjoined to extend along the joined ends of the film, and sealed at both ends thereof; an inner gas flow passage communicating between the gas chamber and an internal space of the bag body; and an outer gas flow passage communicating between the gas chamber and an external space of the bag body, whereby a ventilation channel communicating between an inside and an outside of the bag body is composed of the inner gas flow passage, a subsection of the gas chamber communicating with the inner gas flow passage, and the outer gas flow passage being adjacent to the inner gas flow passage and communicating with the subsection of the gas chamber,

wherein the gas chamber comprises: an approximately linear-shaped transverse part extending in a direction along which the approximately rectangular waves extend approximately parallel to the joined ends of the film; a heightwise part extending in a direction connecting the internal space and the external space of the bag body, at an angle of 40 degrees to 120 degrees with respect to the transverse part; and a bent part which is a joining part between the transverse part and the heightwise part, wherein: the gas chamber has a length of 400 mm to 1600 mm, and a width of 0.7 mm to 3.5 mm; the inner gas flow passage has a width of 0.5 mm to 3 mm; the outer gas flow passage has a width of 0.5 mm to 3 mm; and the bent part is provided in a number of 20 to 80 per said ventilation channel.

[Advantageous Effects of Invention]

The present invention provides a coffee-preserving bag body capable of, in addition to discharging carbon dioxide and preventing oxygen inflow, having sufficient strength, and preventing oxygen inflow due to a rapid volume change.

Further, the present invention provides a manufacturing method for such a coffee-preservation bag body, and a coffee preservation method using the coffee-preserving bag body.

The inventor estimates that the coffee-preserving bag body according to the present invention provides the above advantageous effect for the following reasons. Firstly, in the coffee-preserving bag body according to the present invention, carbon dioxide generated thereinside is discharged by the ventilation channel, and intrusion of oxygen from the outside through the ventilation channel can be suppressed by carbon dioxide filled in the ventilation channel.

Secondly, in the coffee-preserving bag body according to the present invention, the gas chamber of the ventilation channel provided in the band-shaped joining region has a bent part which bends at an angle of 40 degrees to 120 degrees with respect to an edge of the after-mentioned one end of the bag body. Thus, in the band-shaped joining region, a necessary and sufficient strength is maintained in both a direction perpendicular to and a direction parallel to the edge of the joined ends of the film. This makes it possible to prevent breakage of the bag body when an external force acts on the band-shaped joining region, particularly, when a perpendicular tensile stress acts on the edge of the joined ends of the film.

Further, due to the bent part comprised in the air chamber of the ventilation channel, resistance against the flow of gas having a high flow velocity becomes larger. Thus, when a rapid volume decrease occurs in the bag body, the carbon dioxide inside the bag body is less likely to escape to the outside of the bag body. Consequently, the pressure inside the bag body slightly rises. When the volume of the bag body subsequently returns to the original value, the pressure also returns to the original value. In the above process, oxygen is less likely to intrude into the bag body.

On the other hand, the bent part comprised in the gas chamber of the ventilation channel does not become resistance against the flow of gas having a very low flow velocity, such as carbon dioxide generated by coffee. Thus, even if the ventilation channel has such a bent part, it is possible to quickly discharge carbon dioxide.

BRIEF DESCRIPTION OF DRAWINGS

FIG. 1 is a schematic plan view of a coffee-preserving bag body according to a preferred embodiment of the present invention.

FIG. 2 is a schematic diagram enlargedly showing a part of a gas chamber of a ventilation channel formed in the bag body of FIG. 1.

FIG. 3 is a schematic plan view of a coffee-preserving bag body according to another embodiment of the present invention.

FIG. 4 is a schematic plan view of a coffee-preserving bag body according to yet another embodiment of the present invention.

FIG. 5 is a schematic diagram for explaining a gas chamber of a ventilation channel formed in a bag body according to an embodiment of the present invention.

FIG. 6 is a schematic drawing for explaining a gas chamber of a ventilation channel formed in a bag body according to an embodiment of the present invention.

FIG. 7 is a schematic plan view of a coffee-preserving bag body according to still another embodiment of the present invention.

FIG. 8 is a schematic plan view of a coffee-preserving bag body according to yet still another embodiment of the present invention.

FIG. 9 is a schematic plan view of a coffee-preserving bag body according to another further embodiment of the present invention.

FIG. 10 is a schematic perspective view showing the configuration of an anvil of an ultrasonic joining machine used for manufacturing a coffee-preserving bag body according to an embodiment of the present invention.

DESCRIPTION OF EMBODIMENTS

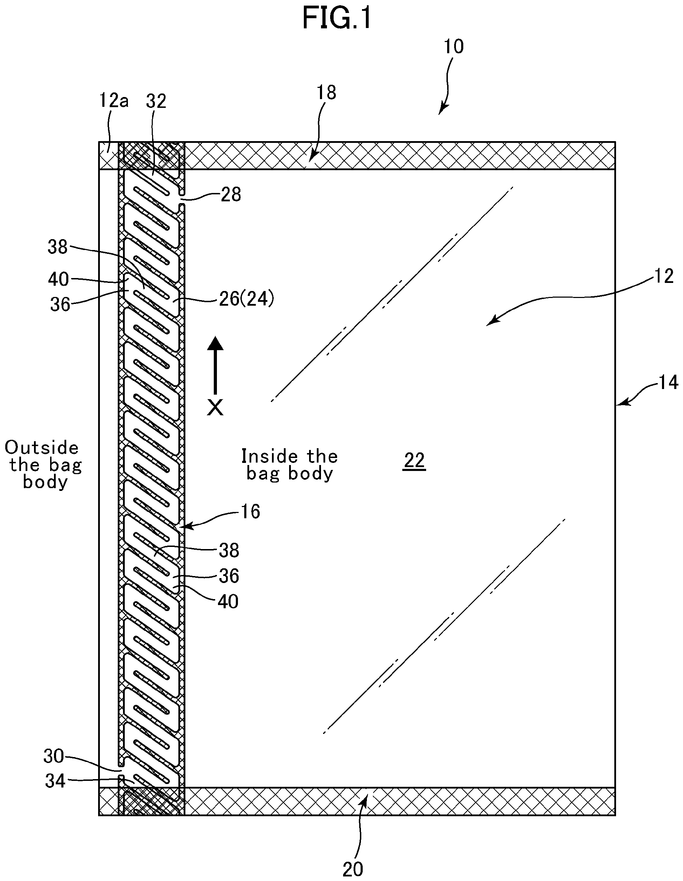

With reference to the drawings, a bag body according to a preferred embodiment of the present invention will now be described. FIG. 1 is a plan view of a coffee-preserving bag body 10 according to a preferred embodiment of the present invention.

In this specification, the term "coffee" includes coffee beans, roasted coffee beans, and roasted and powdered coffee.

A bag body in an embodiment of the present invention is suited to preserve 60 g to 2000 g of coffee.

If the amount of coffee to be preserved is less than 60 g, the amount of carbon dioxide generated by the coffee is excessively small, so that the after-mentioned internal space and ventilation channel of the bag body are likely to fail to be filled with the carbon dioxide, leading to deterioration in quality due to oxygen remaining in the bag body. On the other hand, if the amount of coffee exceeds 2000 g, the amount of carbon dioxide generated by the coffee is excessively large, so that it becomes difficult to sufficiently discharge the carbon dioxide, leading to expansion of the bag body, and risk of rupture of of the bag body in some situations.

As shown in FIG. 1, the bag body 10 has a rectangular shape obtained by folding one rectangular film 12 into two along a folding part 14 which is a lateral center line, such that two lateral ends 12a of the film are overlapped together.

The lateral ends of two mutually-overlapped halves of the sheet 12 are joined together by ultrasonic welding to form a mentioned band-shaped joining region 16 to be described in detail later. A pair of upper ends and a pair of lower ends of the two mutually-overlapped halves of the sheet 12 are also joined together, separately, to form a top seal section 18 and a bottom seal section 20. As a result, the bag body 10 has a rectangular-shaped internal space 22 in plan view, whose four sides are surrounded by the folding part 14, the band-shaped joining region 16, the top seal section 18, and the bottom seal section 20, wherein the internal space 22 is formed as a space for accommodating coffee.

In the top seal section 18 and the bottom seal section 20, the overlapped halves of the film 12 is joined by heat sealing to form a gastight structure. The width of each of the top seal section 18 and the bottom seal section 20 is preferably set to fall within the range of, e.g., 3 mm to 20 mm, more preferably 5 mm to 15 mm. By setting the width of each of the top seal section 18 and the bottom seal section 20 to 3 mm or more, it becomes possible to maintain sealing strength, and on the other hand, by setting the width thereof to 20 mm or less, it becomes possible to achieve uniform joining.

In this embodiment, the bag body 10 has a longitudinal length of 10 cm to 60 cm, and a lateral length of 6 cm to 40 cm. The advantageous effects of this embodiment can be effectively obtained by combining the above size of the bag body and the amount of coffee to be preserved. Further, by setting the size of the bag body to fall within this range, handleability of the bag body is improved. For example, in the above size, the length may be 10 cm to 60 cm, and the lateral length may be 10 cm to 40 cm.

Preferably, the size of the bag body and the amount of coffee satisfy the condition that a value of [(the longitudinal length (cm) of the bag body) $\times$ (the lateral length (cm) of the bag body) $\div$ (the amount of coffee (g))] is 0.5 $cm^2$/g to 2.2 $cm^2$/g.

As the barrier film used as the film in this embodiment, a heretofore-known film, such as: a film made of a polymer comprising vinyl alcohol or vinylidene chloride as a constituent; a polymer film deposited with one of silica, alumina, and aluminum; or a metal foil layer, is used.

Further, a film in which a substrate film and an oxygen barrier film are laminated together, and a laminate film in which an oxygen barrier coat is provided on a substrate film, may also be used. As the substrate film, it is possible to use a film (including paper) in which a sealant layer is provided on paper or a polymer film made of polypropylene, polyethylene, or the like.

The barrier film used in this embodiment has a thickness of 15 $\mu$m to 150 $\mu$m, preferably 20 $\mu$m to 100 $\mu$m. If the thickness of the film is less than 15 $\mu$m, the strength of the bag body is likely to become insufficient, and if the thickness exceeds 150 $\mu$m, it is disadvantageous in terms of cost.

The barrier film used in this embodiment may be transparent or may be opaque. However, it is preferable to use an opaque packaging film in order to prevent a content of the bag body from degrading by sunlight. Further, in order to enhance aesthetic quality, the film may have a surface subjected to printing.

Although the printing method is not particularly limited, an inkjet method is preferable from a viewpoint of being easy to cope with low-volume production.

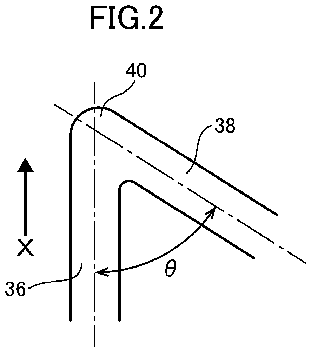

Next, the configuration of the band-shaped joining region 16 will be described. As mentioned above, the coffee-preserving bag body 10 according to this embodiment comprises the band-shaped joining region 16 in which the two ends 12a of the film are overlapped and joined together by ultrasonic welding. This band-shaped joining region 16 has approximately the same width and a rectangular shape. The band-shaped joining region 16 extends over the entire length of the joined ends 12a of the film 12, in a direction indicated by the arrowed line X in FIG. 2, i.e., a direction approximately parallel to the joined ends 12a of the film 12, along an end of the bag body 10 formed by the joined ends 12a of the film 12.

In this embodiment, the band-shaped joining region 16 is provided in a side seal section of the bag body 10, but may be provided in another portion of the bag body, e.g., in another seal section such as a center seal section.

In this embodiment, the width of the band-shaped joining region 16 is preferably 5 mm to 20 mm, more preferably 6 mm to 15 mm. If the width of the band-shaped joining region 16 is less than 5 mm, the strength of the bag body can be insufficient, and if the width exceeds 20 mm, it can be undesirable in terms of aesthetic quality.

In this embodiment, the band-shaped joining region 16 is formed by ultrasonic welding, but other forming methods may be used. For example, it may be formed by an adhesive or heat sealing.

The use of an ultrasonic joining method is preferably from a viewpoint of capability to form a ventilation channel with an accurate shape, and joining speed.

In the band-shaped joining region 16, at least one ventilation channel 24 communicating between the internal space 22 of the bag body 10 and the outside is formed. The ventilation channel 24 is an elongate portion formed by leaving the overlapped halves of the film 12 unjoined in the band-shaped joining region 16, and is a portion taking a form of an elongate flow channel when gas is accommodated thereinside. Thus, the gas can pass through the inside thereof.

The ventilation channel 24 is composed of: a gas chamber 26 which is a space shaped as approximately rectangular waves, the gas chamber 26 being formed to extend along the joined ends of the film, and sealed at both ends thereof; an inner gas flow passage 28 communicating between the gas chamber 26 and the internal space 22 of the bag body 10; and an outer gas flow passage 30 communicating between the gas chamber 26 and the external space of the bag body 10.

Specifically, the ventilation channel 24 is composed of: the inner gas flow passage 28; a subsection (subregion or subzone) of the gas chamber 24 whose one end communicates with the inner gas flow passage 28; and the outer gas flow passage 30 being adjacent to the inner gas flow passage 28 and communicating with the other end of the subsection (subzone) of the gas chamber. In the bag body 10 illustrated in FIG. 1, each of the inner ventilation channel 28 and the outer gas flow passage 30 is provided in a number of one. This means that the bag body 10 is provided with one ventilation channel 24 extending from the internal passage 28 to the outer gas flow passage 30 through the gas chamber 26.

Thus, the internal space 22 of the bag body 10 is placed in fluid communication with the outside via the ventilation channel 24.

In the above embodiment, one ventilation channel is provided per said bag body 10. However, the number of ventilation channels per said bag body 10 is not limited thereto.

In the coffee-preserving bag body according to the present invention, the band-shaped joining region is preferably provided in an area parallel to the longitudinal direction of the bag body. Specifically, the band-shaped joining region is preferably provided in a side seal section or a center seal section (rear bonded section) which is parallel to the longitudinal direction of the bag body.

Some preferred examples of the size of the bag body and the number of ventilation channels according to the net weight of coffee will be shown below. When the net weight of coffee is 60 g to less than 150 g, examples include a configuration in which the longitudinal length and the lateral length of the bag body are set to fall within the range of 15 cm to less than 24 cm, and the range of 6 cm to less than 11 cm, respectively, and the ventilation channel is provided in a number of one to four.

When the net weight of coffee is 150 g to less than 250 g, examples include a configuration in which the longitudinal length and the lateral length of the bag body are set to fall within the range of 20 cm to less than 30 cm, and the range of 8.5 cm to less than 12 cm, respectively, and the ventilation channel is provided in a number of one to six.

When the net weight of coffee is 250 g to less than 400 g, examples include a configuration in which the longitudinal length and the lateral length of the bag body are set to fall within the range of 24 cm to less than 34 cm, and the range of 8.5 cm to less than 13 cm, respectively, and the ventilation channel is provided in a number of two to eight.

When the net weight of coffee is 400 g to less than 600 g, examples include a configuration in which the longitudinal length and the lateral length of the bag body are set to fall within the range of 30 cm to less than 40 cm, and the range of 10 cm to less than 20 cm, respectively, and the ventilation channel is provided in a number of three to nine.

When the net weight of coffee is 600 g to less than 1200 g, examples include a configuration in which the longitudinal length and the lateral length of the bag body are set to fall within the range of 35 cm to less than 45 cm, and the range of 15 cm to less than 40 cm, respectively, and the ventilation channel is provided in a number of six to twelve.

When the net weight of coffee is 1200 g to less than 2000 g, examples include a configuration in which the longitudinal length and the lateral length of the bag body are set to fall within the range of 40 cm to less than 60 cm, and the range of 20 cm to less than 40 cm, respectively, and the ventilation channel is provided in a number of ten to twelve.

The gas chamber 26 has an approximately rectangular wave-like planar shape, and is arranged to extend within the band-shaped joining region 16 in a longitudinal direction of the band-shaped joining region 16.

The term "approximately rectangular waves" is not limited to a series of strict rectangular-shaped waves, but also includes a series of waves in which a transverse part and a heightwise part of each wave are joined at an angle other than 90 degrees, or through a rounded bent (curved) part. Further, each part constituting each of the approximately rectangular waves needs not be a complete straight line, i.e., a rectangular wave having a slight bentness is also included in the "approximately rectangular wave". However, since a wave shape formed entirely by a smooth curve, such as a corrugated shape, a sine curve, and a U shape, fails to obtain the advantageous effects of the present invention, it is not included in an approximately rectangular wave shape.

In this embodiment, the term "approximately rectangular waves" means a series of "rectangular-shaped" portions each having the same size and shape, and also has a heightwisely (bilaterally on the bag body) symmetrical shape.

The gas chamber 26 is formed to extend in a direction approximately parallel to the joined ends 12a of the film 12 (in the direction indicated by the arrowed line X in FIG. 2), and the two halves of the film 12 are joined in the area surrounding the gas chamber 26. Further, one end 32 and the other end 34 of the gas chamber 26 are sealed by joining the two halves of the film 12 in the areas surrounding the two ends.

FIG. 2 is a schematic diagram enlargedly showing a part of the gas chamber 26.

As shown in FIG. 2, the gas chamber 26 of the bag body 10 according to this embodiment is provided with plural sets of: an approximately linear-shaped transverse parts 36 extending in a direction along which the approximately rectangular waves extend approximately in parallel with the joined ends 12a of the film 12; a heightwise part 38 extending from each of both ends of the transverse part 36 in a direction connecting the internal space 22 and the external space of the bag body 10 at an interior angle $\theta$ with respect to the transverse part 36; and a bent part 40 which is a joining part between the transverse part 36 and the heightwise part 38, thereby having an approximately rectangular wave shape.

In the bag body 10 according to this embodiment, the angle $\theta$, which is an interior angle of the bent part 40, is set to fall within the range of 40 degrees to 120 degrees.

By setting the angle of the bent part to fall within the range of 40 degrees to 120 degrees, it becomes possible to increase the strength of the bag body. Further, by setting this angle to fall within the range of 45 degrees to 85 degrees, more preferably 50 degrees to 80 degrees, it becomes possible to, in addition to increasing the strength of the bag body, suppress the inflow of oxygen into the bag body when the volume of the bag body is instantaneously changed. In particular, by combining the technique of varying the width of the above-mentioned gas chamber 26 described above, it becomes possible to further effectively prevent the inflow of oxygen.

Preferably, the bent part is provided in a number of about 60 to about 90 per 10 cm length along the direction along which the approximately rectangular waves extend (longitudinal direction of the bag body).

In this embodiment, one ventilation channel 24 is configured to have 15 to 90 bent parts. The number of bent parts 40 to be provided per said ventilation channel 24 is more preferably 20 to 80. By providing the bent part in a number of 15 or more, it becomes possible to reliably prevent the inflow of oxygen from the outside and ensure the strength of the bag body. Further, by providing the bent part in a number of 90 or less, it becomes easy to discharge carbon dioxide.

In this embodiment, the length of the gas chamber 26 is preferably 200 mm to 2400 mm, more preferably 300 mm to 2000 mm, further preferably 400 mm to 1600 mm.

In this embodiment, the length of the ventilation channel 24 is preferably 40 mm to 320 mm, more preferably 60 mm to 300 mm, further preferably 80 mm to 280 mm. By setting the length of the ventilation channel 24 to 40 mm or more, it becomes easy to suppress the intrusion of oxygen, and on the other hand, by setting the length of the ventilation channel 24 to 320 mm or less, it becomes easy to ensure the strength of the bag body.

In the bag body 10 according to this embodiment, the width of the gas chamber 26 is approximately constant over the entire length of the gas chamber 26, and is set to fall within the range of 0.5 mm to 5 mm. By setting the width of the gas chamber 26 to 0.5 mm or more, it becomes easy to discharge carbon dioxide, and on the other hand, by setting the gas chamber 26 to 5 mm or less, it becomes easy to suppress the intrusion of oxygen. The width of the gas chamber 26 is preferably 0.6 mm to 4 mm, more preferably 0.7 mm to 3.5 mm.

In this embodiment, the area of the gas chamber 26 in plan view is set to fall within the range of 75 $mm^2$ to 2000 $mm^2$. It is preferably 100 $mm^2$ to 1750 $mm^2$, more preferably 200 $mm^2$ to 1500 $mm^2$. By setting the area of the gas chamber 26 to 75 $mm^2$ or more, it becomes possible to effectively suppress the inflow of oxygen. Further, by setting the area of the gas chamber 26 to 2000 $mm^2$ or less, it becomes possible to allow the bag body to have sufficient strength.

In the bag body 10 according to this embodiment, the width of the inner gas flow passage 42 is set to fall within the range of 0.5 mm to 3 mm. By setting the width of the inner gas flow passage 42 to 0.5 mm or more, it becomes possible to efficiently discharge carbon dioxide from the bag body, and on the other hand, by setting the width of the inner gas flow passage 42 to 3 mm or less, it becomes possible to efficiently suppress the inflow of oxygen. The width of the inner gas flow passage 42 is more preferably 0.7 mm to 2.5 mm.

In the bag body 10 according to this embodiment, the length of the inner gas flow passage 42 is set to fall within the range of 0.5 mm to 5 mm. By setting the length of the inner gas flow passage 42 to 0.5 mm or more, it becomes possible to keep joining strength in this area larger, and on the other hand, by setting the length of the inner gas flow passage 42 to 5 mm or less, it becomes possible to prevent the deterioration of aesthetic quality. The length of the inner gas flow passage 42 is more preferably 0.6 mm to 4 mm, further preferably 0.7 mm to 3 mm.

In the bag body 10 according to this embodiment, the length of the outer gas flow passage 44 is set to fall within the range of 0.5 mm to 5 mm. By setting the length of the outer gas flow passage 44 to 0.5 mm or more, it becomes possible to keep joining strength in this area larger, and on the other hand, by setting the length of the outer gas flow passage 44 to 5 mm or less, it becomes possible to prevent the deterioration of aesthetic quality. The length of the inner gas flow passage 42 is more preferably 0.6 mm to 4 mm, further preferably 0.7 mm to 3 mm.

In the bag body 10 according to this embodiment, the width of the outer gas flow passage 44 is set to fall within the range of 0.5 mm to 3 mm. By setting the width of the outer gas flow passage 44 to 0.5 mm or more, it becomes possible to efficiently discharge carbon dioxide from the bag body, and on the other hand, by setting the width of the outer gas flow passage 44 to 3 mm or less, it becomes possible to efficiently suppress the inflow of oxygen. The width of the outer gas flow passage 42 is more preferably 0.7 mm to 2.5 mm.

In the bag body 10 according to this embodiment, the ratio of the width of the gas chamber 26 and the width of the outer gas flow passage 44 is set to fall within the range of 0.7 to less than 1.0. By setting this ratio to fall within the range of 0.7 to less than 1.0, it becomes possible to not only achieve both the discharge of carbon dioxide and the prevention of oxygen inflow, but also make it harder for oxygen to flow in when a rapid volume decrease occurs in the bag body. The ratio of the width of the gas chamber 26 to the width of the outer gas flow passage 44 is more preferably 0.75 to 0.97.

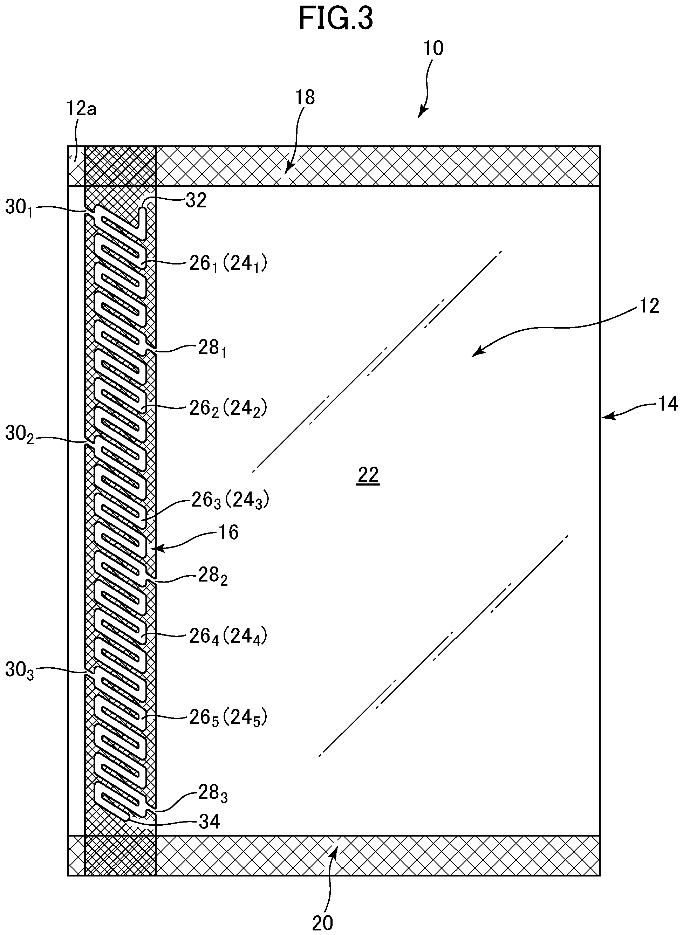

As in an embodiment illustrated in FIG. 3, when each of the inner gas flow passage 28 and the outer gas flow passage 30 is provided plurally (in a number of three in this embodiment), the inner gas flow passage 28 and the outer gas flow passage 30 are alternately provided along the longitudinal direction of the gas chamber 26 extending in an approximately rectangular wave pattern,

This means that the bag body illustrated in FIG. 3 is provided with five ventilation channels each composed of: the inner gas flow passage 28; a subsection of the gas chamber 26 communicating with the inner gas flow passage 28; and the outer gas flow passage 30 being adjacent to the inner gas flow passage 28 and communicating with the subsection of the gas chamber 28.

More specifically, in the bag body 10 illustrated in FIG. 3, a first ventilation channel $24_1$ is composed of: an upper, or first, inner gas flow passage $28_1$; a first subsection $26_1$ of the gas chamber 26 communicating with the first inner gas flow passage $28_1$ (on its upper side); and a first outer gas flow passage $30_1$ adjacent to the first inner gas flow passage $28_1$ in the longitudinal direction (in a propagation direction) of the approximately rectangular waves drawn by the gas chamber.

Further, a second ventilation channel $24_2$ is composed of: the upper, or first, inner gas flow passage $28_1$; a second subsection $26_2$ of the gas chamber 26 communicating with the first inner gas flow passage $28_1$ (on its lower side); and a second outer gas flow passage $30_2$ adjacent to the first inner gas flow passage $28_1$ in the longitudinal direction (in a direction opposite to the propagation direction) of the approximately rectangular waves drawn by the gas chamber.

Further, a third ventilation channel $24_3$ is composed of: an intermediate, or second, inner gas flow passage $28_2$; a third subsection $26_3$ of the gas chamber 26 communicating with the second inner gas flow passage $28_2$ (on its upper side); and a second outer gas flow passage $30_2$ adjacent to the second inner gas flow passage $28_2$ in the longitudinal direction (in the propagation direction) of the approximately rectangular waves drawn by the gas chamber.

Further, a fourth ventilation channel $24_4$ is composed of: the intermediate, or second, inner gas flow passage $28_2$; a fourth subsection $26_4$ of the gas chamber 26 communicating with the second inner gas flow passage $28_2$ (on its lower side); and a third outer gas flow passage $30_3$ adjacent to the second inner gas flow passage $28_2$ in the longitudinal direction (in the direction opposite to the propagation direction) of the approximately rectangular waves drawn by the gas chamber.

Further, a fifth ventilation channel $24_5$ is composed of: a lower, or third, inner gas flow passage $28_3$; a fifth subsection $26_5$ of the gas chamber 26 communicating with the third inner gas flow passage $28_3$ (on its upper side); and the third outer gas flow passage $30_3$ adjacent to the third inner gas flow passage $28_3$ in the longitudinal direction (in the propagation direction) of the approximately rectangular waves drawn by the gas chamber.

Carbon dioxide generated by coffee inside the bag body 10 is discharged to the outside via the ventilation channels $24_{1-5}$ having the above configurations. Further, during preservation of the coffee, such carbon dioxide is filled in the ventilation channels 24, thereby suppressing the intrusion of oxygen into the internal space 22 of the bag body 10 via the ventilation channels 24.

In the embodiments illustrated in FIGS. 1 and 3, one gas chamber 26 is provided in the band-shaped joining region 16 of the bag body 10, and one or five ventilation channels 24 are formed by the one gas chamber 26.

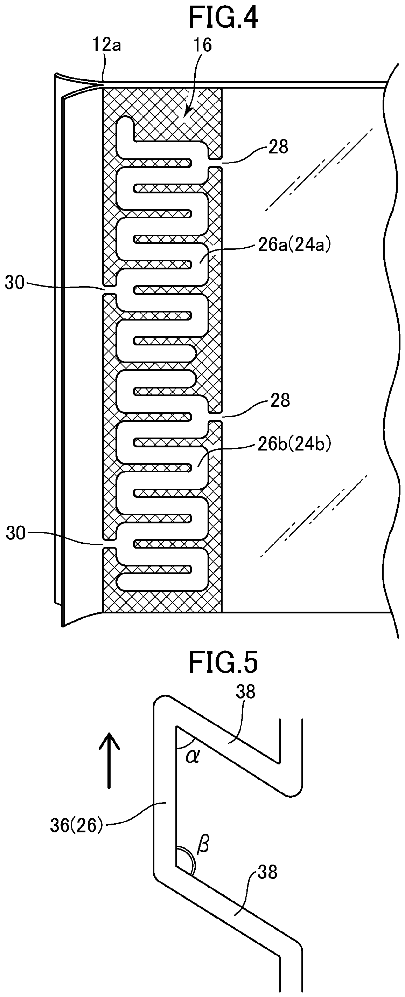

However, the present invention may have a configuration in which plural (e.g., two to six; two in FIG. 4) independent gas chambers 26a, 26b are formed in the band-shaped joining region 16, and each of the inner gas flow passage 28 and the outer gas flow passage 30 is provided in each of the gas chambers 26a, 26b by a number of at least one, thereby forming two or more ventilation channels 24a, 24b in the one band-shaped joining region 16, as schematically illustrated in FIG. 4. According to such a configuration, even when one ventilation channel does not function due to clogging by foreign matter, or the like, a certain degree of carbon dioxide discharge function can be exerted.

In the bag body 10 according to this embodiment, the gas chamber 26 is configured such that the sum of two interior angles $\alpha$, $\beta$ (FIG. 5) of one rectangular wave is set to fall within the range of 150 degrees to 240 degrees. By setting the sum of the interior angles $\alpha$, $\beta$ to fall within the range of 150 degrees to 240 degrees, it becomes possible to increase the strength of the bag body 10, and suppress the inflow of oxygen into the bag body 10 when the volume of the bag body 10 is instantaneously changed.

In this embodiment, the value of the angle $\alpha$ is 40 degrees to 90 degrees, preferably 45 degrees to 70 degrees, more preferably 50 degrees to 60 degrees, and the value of the angle $\beta$ is 90 degrees to 140 degrees, more preferably 110 degrees to 135 degrees, further preferably 120 degrees to 130 degrees. By setting the $\alpha$ and $\beta$ to such values, it becomes possible to ensure sufficient strength and suppress the inflow of oxygen due to a rapid volume change. The sum of the interior angles $\alpha$, $\beta$ is more preferably 160 degrees to 200 degrees. For example, it may be 180 degrees.

Further, the $\alpha$ and $\beta$ preferably satisfy the following conditions.

$$40 \text{ degrees} \leq \alpha \leq 90 \text{ degrees,}$$

$$90 \text{ degrees} \leq \beta \leq 140 \text{ degrees,}$$

$$160 \text{ degrees} \leq \alpha + \beta \leq 200 \text{ degrees}$$

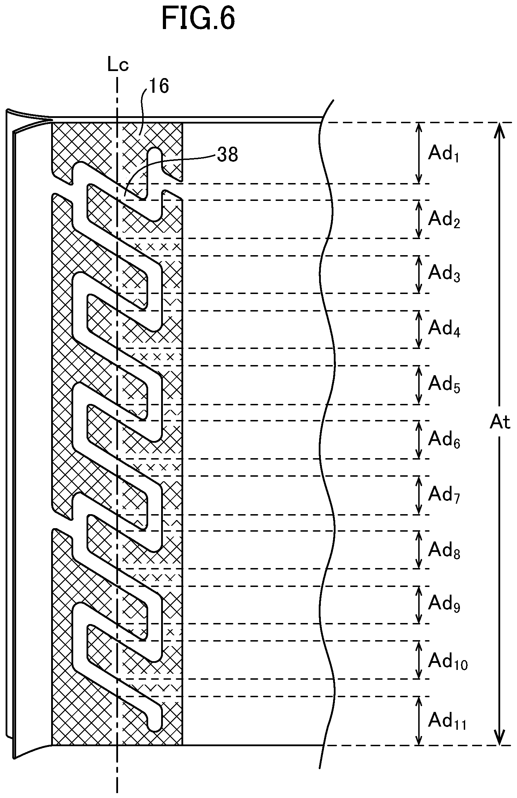

Further, in the bag body 10 according to this embodiment, each heightwise part 38 of the gas chamber 26 is arranged to cross a widthwise center line (virtual straight line) Lc of the band-shaped joining region 16, as schematically illustrated in FIG. 6.

The heightwise part 38 of the gas chamber 26 is arranged in a zone having a width of 50% to 98% of the entire width of the band-shaped joining region 16. By providing the gas chamber in the zone having a width of 50% to 98%, it becomes easy to achieve both the discharge of carbon oxide and the prevention of oxygen inflow, and provide desirable aesthetic quality.

Each heightwise part 38 of the gas chamber 26 is preferably arranged in a zone having a width of 55% to 95% of the entire width of the band-shaped joining region 16, and more preferably arranged in a zone having a width of 60% to 90% thereof.

Further, the bag body 10 according to this embodiment is configured such that when the length of the imaginary straight line Lc is denoted by Ad, and the sum of the lengths ($Ad_1$, $Ad_2$ $Ad_3$ $Ad_4$, ---, $Ad_{11}$) of joined portions of the halves of the film on the imaginary straight line Lc is denoted by Ad, a value of Ad/At is 0.10 to 0.75. If the value of Ad/At is less than 0.10, the strength of the bag body 10 becomes insufficient, possibly leading to a situation where the bag body can be broken when it falls from a high place, etc. On the other hand, if the value of Ad/At exceeds 0.75, the width of the gas chamber becomes excessively small, possibly leading to a situation where the discharge of carbon dioxide becomes insufficient, or the length of the gas chamber becomes excessively short, possibly leading to a situation where it becomes impossible to sufficiently prevent the inflow of oxygen from the outside.

This point will be described again in accordance with FIG. 6. FIG. 6 is a schematic diagram of the band-shaped joining region and the ventilation channel 24 of the bag body 10 according to this embodiment. In FIG. 6, for the sake of clarification, the gas chamber 26 in the ventilation channel 24 is significantly schematically depicted.

As mentioned above, in this embodiment, when the length of the imaginary straight line Lc is denoted by Ad, and the total length of the joined portions ($Ad_1$, $Ad_2$ $Ad_3$ $Ad_4$, ---, $Ad_{11}$ in FIG. 6) of the film on the imaginary straight line Lc, i.e.,

the total length of portions of the imaginary straight line Lc which do not cross the gas chamber 26 (specifically, the heightwise parts of the gas chambers), is denoted by Ad, the value of Ad/At is set to fall within the range of 0.10 to 0.75.

In the above embodiment, the gas chamber 26 has a configuration in which it has a constant width over the entire length thereof, i.e., the width of the transverse part 36 is equal to the width of the heightwise part 38. However, in the present invention, the gas chamber 26 may be configured to be partially different in terms of width.

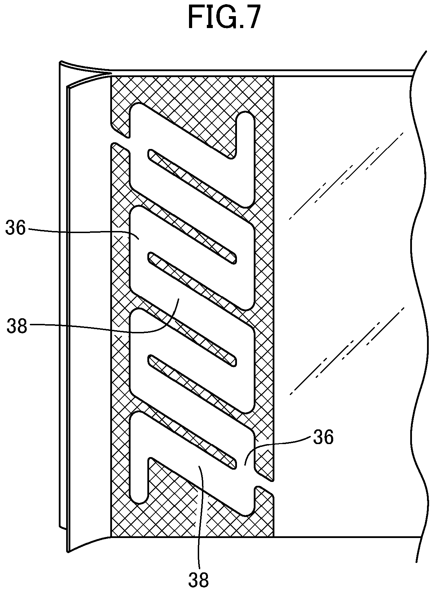

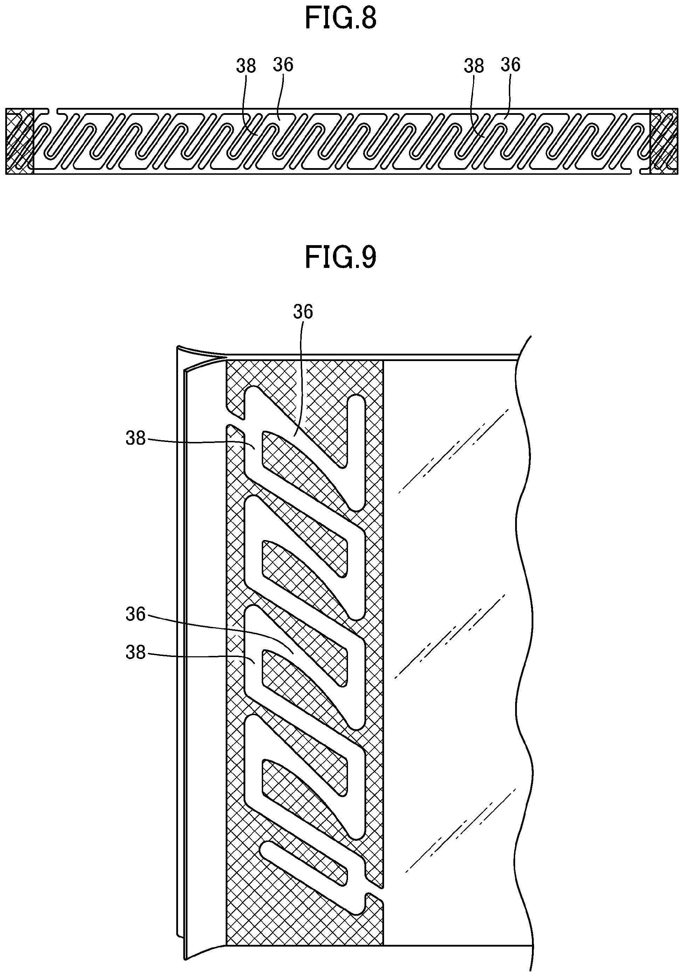

For example, the gas chamber may be configured such that the width of the transverse part 36 is narrower than the width of the heightwise part 38, as in a bag body illustrated in FIG. 7, or such that the width of the heightwise part 38 is narrower than the width of the transverse part 36, as in a bag body illustrated in FIG. 8. Further, the gas chamber may be configured such that the width of the heightwise part 38 varies therewithin, as in a bag body illustrated in FIG. 9. These configurations make it possible to effectively prevent the inflow of oxygen due to a rapid volume change.

When configuring the gas chamber 26 to have different widths, the ratio of the width of a widest portion to the width of a narrowest portion is preferably 1.2 to 3, more preferably 1.5 to 2.5.

In the drawings of the present application, for the sake of clarification, the shape of each approximately rectangular wave constituting the gas chamber, an inter-wave pitch. etc., are schematically depicted.

Next, a coffee-preserving bag body manufacturing method according to one embodiment of the present invention will be described. Firstly, the configuration of an ultrasonic joining machine used for manufacturing a bag body (for forming a band-shaped joining region) will be described.

In order to form the band-shaped joining region of the bag body, an ultrasonic joining machine is preferably used. The ultrasonic joining machine is a theretofore-known ultrasonic joining machine which comprises: an ultrasonic oscillator to convert commercial electricity of 50 Hz or 60 Hz into a high-frequency signal of about 15 to 70 KHz; a converter to convert the converted signal into mechanical vibration; a booster to amplify this mechanical vibration; a disk-shaped horn to transmit the amplified vibration to a target object to be fusion-bonded; and a disk-shaped anvil to clamp two ends of the film in cooperation with the horn.

Each of the horn and the anvil is disk-shaped, and they are configured to rotate while clamping two ends of the film, and continuously form the band-shaped joining region in two ends of overlapped halves of the film. The horn and the anvil are rotationally driven by a non-illustrated drive device.

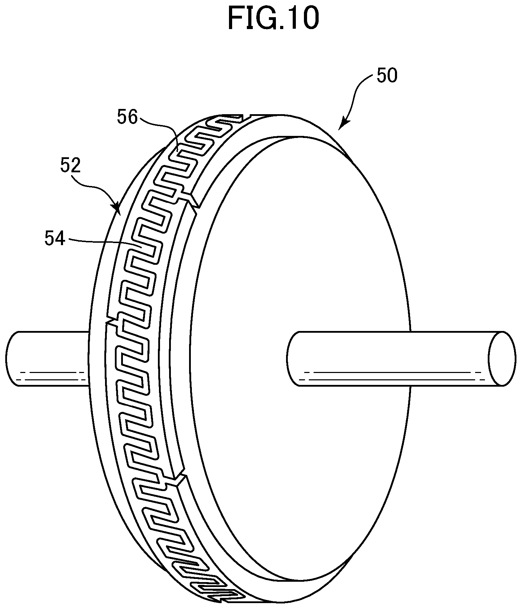

FIG. 10 is a schematic perspective view showing the configuration of the anvil 50 used in the ultrasonic joining machine. The anvil 50 has a disk-like shape whose outer peripheral surface 52 is formed with a raised portion 54 for shaping the band-shaped joint region of the bag body. The raise portion 54 is formed with a groove 56 corresponding to the planar shape of the ventilation channel(s) 24 of the bag body.

Each of the height of the raised portion 54 and the depth of the groove 56 is preferably 0.2 mm to 1.0 mm, more preferably 0.25 mm to 0.8 mm, further preferably 0.3 mm to 0.5 mm.

If each of the height of the raised portion 54 and the depth of the groove 56 is less than 0.2 mm, the joining strength of the band-shaped joining region can become insufficient, and on the other hand, if each of the height of the raised portion 54 or the depth of the groove 56 exceeds 1.0 mm, the film can be cut off by an edge of the raised portion or the groove, leading to difficulty in joining. The height of the raised portion 54 and the depth of the groove 56 may be the same or may be different from each other.

The cross-sectional shape of each of the raised portion 54 and the groove 56 is preferably a rectangular shape, a semicylindrical shape, or a trapezoidal shape, and from a viewpoint of preventing the film from being cut off by the edge, it is preferable to employ a semicylindrical shape or a trapezoidal shape.

The horn used in the ultrasonic joining machine according to this embodiment is disk-shaped, and has a smooth outer peripheral surface.

The diameter of each of the horn and the anvil is about 50 to 150 mm, and the width of the outer peripheral surface of each of the horn and the anvil is about 7 to 25 mm, correspondingly to the width of the band-shaped joining region. As for a material of the horn and the anvil, any heretofore-known material may be used. In particular, it is preferable to employ stainless steel or titanium alloy.

The edge of the outer peripheral surface of each of the horn and the anvil may be chamfered. By chamfering the edge, it becomes possible to prevent the film from being cut off by the edge. Further, holes (lightening holes) for weight reduction may be formed in side surfaces of each of the horn and the anvil.

A joining speed (driving speed) is preferably about 5 to 50 m/min, more preferably 150 m/min to 45 m/min, and more preferably 20 m/min to 40 m/min. By setting the joining speed to 5 m/min or more, it becomes possible to achieve efficient manufacturing. On the other hand, if the joining speed is less than 5 m/min, excessive heat is applied to joining portions, possibly leading to difficulty in forming a ventilation channel having a uniform width. Further, by setting the joining speed to 50 m/min or less, it becomes possible to obtain sufficient joining strength.

When clamping the joined ends of the film, a pressure of about 20 to 500 N is applied between the horn and the anvil by a pressing device.

Although the above description has been made about an ultrasonic joining machine comprising an anvil having a raised portion on an outer peripheral surface thereof, and a horn having a smooth outer peripheral surface, it is possible to use, in another embodiment, an ultrasonic joining machine comprising an anvil having a smooth outer peripheral surface, and a horn having a raised portion on an outer peripheral surface thereof.

Next, a method of manufacturing the coffee-preserving bag bod according to the above embodiment will be described. However, a coffee-preserving bag body manufacturing method according to the present invention is not limited thereto.

(1) A barrier film is prepared.

(2) This film is folded into two, and the folded halves of the film are joined by an ultrasonic joining machine which comprises: a disk-shaped anvil having, on a circumferential surface thereof, a concavity-convexity pattern corresponding to the band-shaped joining region; and a disk-shaped horn having a smooth circumferential surface, to form the band-shaped joining region, the gas chamber, the inner gas flow passage, the outer gas flow passage, and the ventilation channel(s), simultaneously. This joined portion is preferably formed as a side seal section or a rear bonded section.

(3) Then, a bottom seal section is formed by heat sealing or other sealing process.

When forming the bottom seal section, a lower sealed portion of the gas chamber can be simultaneously formed.

(4) Subsequently, a top seal section is formed by heat sealing or other sealing process.

When forming the top seal section, an upper sealed portion of the gas chamber can be simultaneously formed.

The above description has been made about a method of producing a bag body one by one. Alternatively, plural bag bodies may be formed by using a single film to form therein a continuous series of bag body segments each comprising a band-shaped joining region, and then cutting the film into the bag body segments. This method is preferable because it makes it possible to significantly efficiently manufacture the bag bodies.

A method of filling coffee in the coffee-preserving bag body according to the above embodiment is not particularly limited.

For example, it is possible to employ a method which comprises: forming a bag body by the aforementioned method; filling coffee before forming the top seal section; and then forming the top seal section.

It is also preferable to, after filling coffee, fill the inside of the bag body with nitrogen before forming the top seal section. By filling the inside of the bag body with nitrogen, it becomes possible to more effectively suppress the degradation of the coffee during preservation.

It is to be understood that various modifications and variations may be made within the scope of the technical idea recited in the appended claims without being limited to the embodiments of the present invention.

EXAMPLES

Some examples of the present invention will be described below.

(Example 1)

As the ultrasonic joining machine, an ultrasonic joining machine was used in which each of a horn and an anvil is disk-shaped, and a raised portion corresponding to a band-shaped joining region having a gas chamber with the shape illustrated in FIG. 8 was formed on an outer peripheral surface of the anvil. On the other hand, an outer peripheral surface of the horn was smooth.

A barrier film having a width of 30 cm, a length of 100 cm, and a thickness of 85 μm (a laminate film of a nylon film/low-density polyethylene, with a barrier layer) was folded into two, and two ends of the film were overlapped and ultrasonically joined together to form a band-shaped joining region.

The band-shaped joining region was formed over 100 cm along a longitudinal direction of the film to have a width of 10 mm.

The horn of the ultrasonic joining machine was set to have an oscillation frequency of 20 KHz, an oscillation amplitude of 15 μm, a pressing pressure of 250 N, and a joining speed of 25 m/min.

Through the above process, an intermediate bag body comprising four bag bodies each having a length of 25 cm and a width of 15 cm and connected in a longitudinal direction thereof was produced.

An area of the intermediate bag body apart from an upper edge of the intermediate bag body by 25 cm was heat-sealed in a widthwise direction to form a bottom seal section having a width of 3 mm, and simultaneously seal a lower end of a gas chamber.

Then, the intermediate bag body was cut along a lower edge of the bottom seal section in the width direction to form a bag body having a length 25 cm and a width of 15 cm.

Subsequently, 100 g of coffee beans (Guatemala Peaberry) was put in the bag body, and a nitrogen gas was filled into the bag body. Immediately thereafter, a top seal section having a width of 3 mm was formed by heat sealing to close the bag body.

Through the above process, a bag body accommodating coffee beans was produced. In the same way, from the remaining intermediate bag body, three bag bodies each accommodating coffee beans were produced.

Each of the bag bodies has the band-shaped joining region according to the present invention, in the side seal section, and a ventilation channel is formed in this region. The number of ventilation channels is three, and the length of each ventilation channel is 265 mm. Further, twenty bent parts are provided in each ventilation channel, and a bending angle of the ten bent parts among them is 80 degrees, and a bending angle of the remaining vent parts is 100 degrees. Although the width of each ventilation channel is 2 mm, the width in the bent part is set to 4 mm.

In this state, the coffee was preserved for 80 days. As a result, no expansion was observed in the bag body, and oxygen concentration was 3% or less. Further, there was no breakage of the bag body even when the bag body was dropped three times from the height of 1.5 m to a concrete floor. In this case, no oxygen flowed into the bag body.

(Example 2)

Example 2 was performed in the same manner as that in Example 1, except that the size of the bag body was set to a length of 27 cm and a width of 15 cm, and the shape of the ventilation channel was changed as follows.

Consequently, the same result as that in Example 1 was obtained. The shape of the gas chamber was set to that illustrated in FIG. 3. Other shapes are as follows.

- The number of ventilation channels is three, and the length of each ventilation channel is 260 mm.
- The width of each ventilation channel: the width of a portion approximately parallel to the joined ends of the film is 1.5 mm, and the width of a portion approximately perpendicular to the joined ends of the film is also 1.5 mm.
- Each bent part has an interior angle $\alpha$ of 56 degrees, and an interior angle $\beta$ of 124 degrees.
- In each ventilation channel, the number of bent parts having an interior angle of 56 degrees is nineteen, and the number of bent parts having an interior angle of 124 degrees is nineteen.
- The value of Ad/At is 0.21.
- The area of the gas chamber is 1170 mm$^2$.
- The width of each of the outer gas flow passage and the inner gas flow passage is 1.2, and the ratio of the width of a narrowest portion of each ventilation channel, and the width of the outer gas flow passage is 0.8.

(Example 3)

Example 3 was performed as described below, except that the shape of the ventilation channel was changed as follows.

Consequently, the same result as that in Example 1 was obtained. The shape of the gas chamber was set to that illustrated in FIG. 7. Other shapes are as follows.

- The number of ventilation channels is three, and the length of each ventilation channel is 260 mm.
- The width of each ventilation channel: the width of a portion approximately parallel to the joined ends of the film is 1.5 mm, and the width of a portion approximately perpendicular to the joined ends of the film is 3.0 mm.
- Each bent part has an interior angle $\alpha$ of 56 degrees, and an interior angle $\beta$ of 124 degrees.
- In each ventilation channel, the number of bent parts having an interior angle of 56 degrees is nineteen, and the number of bent parts having an interior angle of 124 degrees is nineteen.
- The value of Ad/At is 0.21.
- The area of the gas chamber is 1440 mm$^2$.
- The width of each of the outer gas flow passage and the inner gas flow passage is 1.2 mm, and the ratio of the width of a narrowest portion of each ventilation channel, and the width of the outer gas flow passage is 0.8.

(Example 4)

Example 4 was performed as described below, except that the shape of the ventilation channel was changed as follows. Consequently, the same result as that in Example 1 was obtained. The shape of the gas chamber was set to that illustrated in FIG. 3. Other shapes are as follows.

- The number of ventilation channels is one, and the length of the ventilation channel is 390 mm.
- The width of the ventilation channel: the width of a portion 42 approximately parallel to the joined ends of the film is 1.5 mm, and the width of a portion 43 approximately perpendicular to the joined ends of the film is also 1.5 mm.

- Each bent part has an interior angle $\alpha$ of 65 degrees, and an interior angle $\beta$ of 115 degrees.
- In the ventilation channel, the number of bent parts having an interior angle of 65 degrees is twenty-nine, and the number of bent parts having an interior angle of 115 degrees is twenty-nine.
- The value of Ad/At is 0.21.
- The area of the gas chamber is 1170 mm$^2$.
- The width of each of the outer gas flow passage and the inner gas flow passage is 1.2 mm, and the ratio of the width of a narrowest portion of the ventilation channel, and the width of the outer gas flow passage is 0.8.

LIST OF REFERENCE SIGNS

| 10: | bag body |
| 12: | film |
| 12a: | end (of film) |
| 16: | belt-shaped joining region |
| 22: | internal space |
| 24: | ventilation channel |
| 26: | gas chamber |
| 28: | inner gas flow passage |
| 30: | outer gas flow passage |
| 32: | end (of gas chamber) |
| 34: | end (of gas chamber) |
| 36: | transverse part (of gas chamber) |
| 38: | heightwise part (of gas chamber) |
| 40: | bent part |

**Claims**

1. A coffee-preserving bag body for preserving 60 g to 2000 g of coffee, the bag body being formed by a barrier film, wherein the bag body has a longitudinal length of 10 cm to 60 cm, and a lateral length of 6 cm to 40 cm, and comprises a band-shaped joining region in which two ends of the film are mutually overlapped and joined together,

   wherein the band-shaped joining region is internally provided with: a gas chamber which is a space shaped as approximately rectangular waves, the gas chamber being formed by leaving the film unjoined to extend along the joined ends of the film, and sealed at both ends thereof; an inner gas flow passage communicating between the gas chamber and an internal space of the bag body; and an outer gas flow passage communicating between the gas chamber and an external space of the bag body, whereby a ventilation channel communicating between an inside and an outside of the bag body is composed of the inner gas flow passage, a subsection of the gas chamber communicating with the inner gas flow passage, and the outer gas flow passage being adjacent to the inner gas flow passage and communicating with the subsection of the gas chamber,
   wherein the gas chamber comprises: an approximately linear-shaped transverse part extending in a direction along which the approximately rectangular waves extend approximately parallel to the joined ends of the film; a heightwise part extending in a direction connecting the internal space and the external space of the bag body, at an angle of 40 degrees to 120 degrees with respect to the transverse part; and a bent part which is a joining part between the transverse part and the heightwise part.

2. A coffee-preserving bag body for preserving 60 g to 2000 g of coffee, the bag body being formed by a barrier film, wherein the bag body has a longitudinal length of 10 cm to 60 cm, and a lateral length of 6 cm to 40 cm, and comprises a band-shaped joining region in which two ends of the film are mutually overlapped and joined together,

   wherein the band-shaped joining region is internally provided with: a gas chamber which is a space shaped as approximately rectangular waves, the gas chamber being formed by leaving the film unjoined to extend along the joined ends of the film, and sealed at both ends thereof; an inner gas flow passage communicating between the gas chamber and an internal space of the bag body; and an outer gas flow passage communicating between the gas chamber and an external space of the bag body, whereby a ventilation channel communicating between an inside and an outside of the bag body is composed of the inner gas flow passage, a subsection of the gas chamber communicating with the inner gas flow passage, and the outer gas flow passage being adjacent to the inner gas flow passage and communicating with the subsection of the gas chamber,

wherein the gas chamber comprises: an approximately linear-shaped transverse part extending in a direction along which the approximately rectangular waves extend approximately parallel to the joined ends of the film; a heightwise part extending in a direction connecting the internal space and the external space of the bag body, at a given angle with respect to the transverse part; and a bent part which is a joining part between the transverse part and the heightwise part, wherein when an angle formed by the transverse part and the heightwise part of the gas chamber at one end of the transverse part is denoted by $\alpha$, and an angle formed by the transverse part and the heightwise part of the gas chamber at the other end of the transverse part is denoted by $\beta$, $(\alpha + \beta)$ is 150 degrees to 240 degrees.

3. The coffee-preserving bag body as claimed in claim 1 or 2, wherein the ventilation channel is provided in a number of one to twelve.

4. The coffee-preserving bag body as claimed in claim 1 or 2, wherein the gas chamber has a length of 200 mm to 2400 mm.

5. The coffee-preserving bag body as claimed in claim 1, wherein the ventilation channel has a widest portion and a narrowest portion, wherein a ratio of a width of the widest portion to a width of the narrowest portion is 1.2 to 3.

6. The coffee-preserving bag body as claimed in claim 1 or 2, wherein the bent part is formed in a number of 15 to 90 per said ventilation channel.

7. The coffee-preserving bag body as claimed in claim 1 or 2, wherein each of the inner gas flow passage and the outer gas flow passage has a width of 0.5 mm to 3 mm.

8. The coffee-preserving bag body as claimed in claim 1 or 2, wherein a ratio of a width of the gas chamber to a width of the outer gas flow passage is 0.4 to less than 1.0.

9. The coffee-preserving bag body as claimed in claim 1 or 2, wherein the gas chamber is arranged such that the heightwise part extends to cross an imaginary straight line Lc extending along a widthwise center of the band-shaped joining region, wherein when a length of a given portion of the imaginary straight line extending to pass through the heightwise part of the gas chamber is denoted by At, and a total length of joined portions of the film on the given portion of the imaginary straight line having the length At is denoted by Ad, (Ad/At) is 0.10 to 0.75.

10. The coffee-preserving bag body as claimed in claim 1 or 2, wherein a total area of the gas chamber in plan view is 75 mm$^2$ to 2000 mm$^2$.

11. The coffee-preserving bag body as claimed in claim 1 or 2, wherein the band-shaped joining region is an ultrasonically joined portion.

12. A coffee-preserving bag body manufacturing method **characterized by** comprising manufacturing the coffee-preserving bag body as claimed in claim 1 or 2, using an ultrasonic joining machine which comprises a disk-shaped anvil having, on an outer peripheral surface thereof, a concavity-convexity pattern corresponding to the band-shaped joining region, and a disk-shaped horn having a flat and smooth circumferential surface.

13. A coffee preservation method, wherein 60 g to 2000 g of coffee is filled into and preserved in the coffee-preserving bag body as claimed in claim 1 or 2.

# FIG.1

# FIG.2

# FIG.3

# FIG.4

# FIG.5

# FIG.6

# FIG.7

36

38

36

38

# FIG.8

# FIG.9

# FIG.10

**INTERNATIONAL SEARCH REPORT**

| International application No. |
| --- |
| **PCT/JP2023/011524** |

**A.    CLASSIFICATION OF SUBJECT MATTER**

*B65D 81/26*(2006.01)i; *B65D 33/01*(2006.01)i
FI:    B65D81/26 E; B65D33/01

According to International Patent Classification (IPC) or to both national classification and IPC

**B.    FIELDS SEARCHED**

Minimum documentation searched (classification system followed by classification symbols)

B65D81/26; B65D33/01

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| X | JP 7004359 B1 (W & CO.) 21 January 2022 (2022-01-21)<br>paragraphs [0032], [0047], [0050]-[0053], [0065], fig. 4 | 1-13 |
| A | JP 2021-75303 A (W & CO.) 20 May 2021 (2021-05-20) | 1-13 |

☐ Further documents are listed in the continuation of Box C.        ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **10 April 2023** | **25 April 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/011524**

| Patent document cited in search report | | | Publication date (day/month/year) | Patent family member(s) | | | Publication date (day/month/year) |
|---|---|---|---|---|---|---|---|
| JP | 7004359 | B1 | 21 January 2022 | JP | 2022-170423 | A | |
| | | | | WO | 2022/230945 | A1 | |
| JP | 2021-75303 | A | 20 May 2021 | (Family: none) | | | |

**EP 4 524 054 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7004359 B

- JP 2021075303 A